# EUROPÄISCHE PATENTSCHRIFT

(11) **EP 1 022 245 B1**
(45) Veröffentlichungstag und Bekanntmachung des Hinweises auf die Patenterteilung: **14.04.2004**
(21) Anmeldenummer: 00100772.3
(22) Anmeldetag: 15.01.2000
(51) Int. Cl.: B65H 19/10

(54) **Klebeband**
Adhesive tape
Bande adhésive

(30) Priorität: 21.01.1999 DE 19902179
(43) Veröffentlichungstag der Anmeldung: 26.07.2000
(73) Patentinhaber: Tesa AG, 20253 Hamburg (DE)
(72) Erfinder: Storbeck, Reinhard, 22457 Hamburg (DE); Wienberg, Uwe, 25436 Uetersen (DE); Eikmeier, Markus, 23738 Lensahn (DE); Wieck, Andreas, 25469 Halstenbek (DE)

(56) Entgegenhaltungen:
- DE-A- 19 544 010
- DE-A- 19 628 317

## Beschreibung

Die Erfindung betrifft ein Klebeband für den fliegenden Rollenwechsel sowie ein Spliceverfahren unter Einsatz eines solchen Klebebandes, insbesondere in Papierveredelungsmaschinen, Druckmaschinen und dergleichen.

Der fliegende Rollenwechsel ist in Papierfabriken oder dergleichen ein gängiges Verfahren, um ohne die schnell laufenden Maschinen anhalten zu müssen eine alte, fast abgespulte Papierrolle durch eine neue zu ersetzen. Dabei werden doppelseitig klebende Selbstklebebänder, sogenannte Fixe, eingesetzt, die einerseits hochklebrig und -tackig sind, andererseits aber aufgrund ihrer wasserlöslichen Selbstklebemassen und Papierträger beim Wiedereinsatz der Papierabfälle in der Papiermaschine nicht stören. Diese Fixe werden in kunstvoller Weise in Zackenform am Bahnanfang verklebt, eine Prozedur, die erfahrene Fachleute verlangt, wobei für den gesamten Arbeitsvorgang aufgrund der schnell laufenden Maschinen nur etwa 4 - 5 Minuten Zeit bleibt.

Obgleich diese Technologie bewährt und eingespielt ist, hat sie doch einige Nachteile. So ist Fachpersonal nötig, Hektik ist vorgegeben, und die Verklebungen sind auch relativ dick, da jeweils zwei Papierlagen und das dazwischen klebende Fix das Resultat sind: ein in der Papierindustrie unerwünschtes Resultat.

Für diese "Spitzenverklebung" beim fliegenden Rollenwechsel gibt es diverse Produkte im Handel, sogenannte Fixe, die neben einem Papierträger eine wasserlösliche Selbstklebemasse beidseits beschichtet aufweisen. Solche Klebebänder sind u.a. unter der Bezeichnung tesafix (Beiersdorf) im Handel.

Im Stand der Technik sind vielfältige Klebebänder für derartige Zwecke beschrieben. So offenbart EP 418 527 A2 ein Verfahren zum Vorbereiten einer Rolle bahnförmigen Bedruckstoffs für automatische Rollenwechsler und einen dafür geeigneten Klebstreifen. Auch DE 40 33 900 A1 beschreibt ein für eine Splice-Stelle geeignetes Klebeband. Nachteilig sind jedoch klebende Bereiche, die nach erfolgtem Spliceverfahren offen liegen.

Das nichtklebende Abdecken von sonst offen liegenden klebenden Bereichen lehrt US 5,702,555 für mehr statische Belastungen einer Sicherung eines Rollenanfangs, während DE 196 32 689 A2 ein derartiges Klebeband für dynamische Belastung beim Spliceverfahren offenbart, dessen Papierträger spaltet und mit seinen Resten die Klebemassen abdeckt.

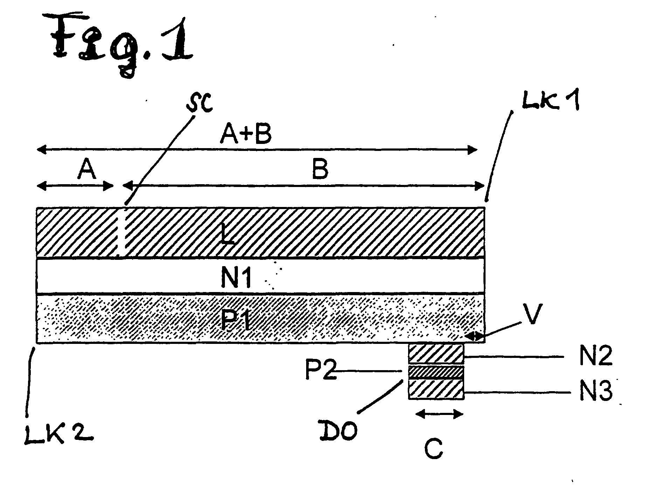

Von dieser Art ist auch ein Klebeband gemäß DE 196 28 317 A1, ebenfalls für ein Spliceverfahren. Dieses Klebeband trägt an seiner nichtklebenden Rückseite ein doppelseitig klebendes Klebeband (6), das einen splicefreudigen Papierträger (7) aufweist, der beim Spliceverfahren spaltet (7a, 7b, Figur 3) und die jeweiligen Kleber abdeckt Dieses doppelseitig klebende Klebeband (6) schließt seitlich mit der einen Seite des Papierträgers (2) ab, ist also längs einer der Längskanten des Klebebandes angeordnet.

In der Praxis zeigen sich auch bei diesen Klebebändern Nachteile, zunächst dadurch, daß ein Splice nicht gelingt, vielmehr als Reißer endet, ohne daß ein Grund dafür ersichtlich wäre.

Aufgabe der Erfindung war es, hier Abhilfe zu schaffen.

Gelöst wird dies durch ein Klebeband und Spliceverfahren, wie dies im Einzelnen in den Ansprüchen näher gekennzeichnet ist. Um Wiederholungen zu vermeiden, wird auf die Ansprüche ausdrücklich Bezug genommen, insbesondere auch betreffend bevorzugte Ausführungsformen.

Erfindungsgemäß gelingen Splice ohne Reißer, wobei das zentrale Merkmal der vorgesehene Versatz bzw. der Abstand V des doppelseitigen Klebebandes DO von der Längskante LK des Klebebandes darstellt. Anhand von Vergleichsversuchen, die in der Tabelle dargelegt sind, zeigt sich dieser Erfolg gegenüber dem Stand der Technik.

### Spaltpapier

Das spaltbare Papier hat vorteilhaft einen deutlich kleineren Spaltwiderstand als der Papierträger, der die Zugkräfte aufnehmen muß. Eine ausreichende Differenz ist hilfreich für das Funktionsprinzip des erfindungsgemäßen Produktes.

Als Spaltpapiere kommen zum Beispiel folgende Papiere oder Papierverbundsysteme in Frage:
- Duplex Papiere: Diese Papiere sind handelsüblich und werden z.B. bei der Herstellung von Filtermaterialien und Tapeten eingesetzt.
- Leicht spaltende Papiere: Die Einstellung der Spaltarbeit erfolgt über die Verdichtung der Papierfaserstruktur. Je geringer die Verdichtung ist, desto geringer ist die Spaltarbeit.
   Geeignete Papiertypen sind beispielsweise einseitig glatte Naturpapiere oder auch hochsatinierte Kraftpapiere.
- Geleimte Papiersysteme: Die Spaltarbeit wird über die Chemie des Haftleims eingestellt. Der Leim soll in das Papier nur unwesentlich eindrungen sein.

Hilfreich sind für die Ziele der vorliegenden Erfindung auch saubere Schnittkanten. Beim Schneidvorgang sollen keine Masseausquetschungen entstehen. Die spaltfähige Ansatzfläche des Spaltmaterials soll insbesondere nicht mit Haftklebemasse bedeckt werden.

Die Einrückung des spaltbaren Materials bzw. der Abstand V soll erfindungsgemäß 0,5 - 15 mm betragen, insbesondere 1 - 7 mm und ganz besonders 1,5 mm - 3,5 mm.

Als Spaltpapier kommen diverse spaltbare Papiersysteme in Frage, wie
- Duplexpapiere (definiert zusammen laminierte Papiere, der Spaltvorgang verläuft extrem homogen, es entsehen keine Spannungsspitzen, z.B. durch inhomogene Verdichtung. Diese Papiere werden zur Herstellung von Tapeten und Filtern eingesetzt.
- Leicht spaltbare Papiersysteme
- Definiert zusammen geleimte hochverdichtete Papiere (⇒ Papier mit einer hoher Spaltfestigkeit). Die Leimung kann beispielsweise mit Stärke, stärkehaltigen Derivaten, Tapetenkleister auf Basis von Methylcellulose (Methylan ®, Henkel KGaA, Düsseldorf) aber auch auf Basis von Polyvinylalkoholderivaten erfolgen.
- Die Breite des Trägers aus Spaltpapier beträgt bevorzugt 3 - 20 mm, insbesondere 6 - 12 mm.

Als Selbstklebemassen kommen alle Basistypen von Haftklebemasse in Frage, insbesondere
- Acrylate (wasserlöslich und nicht wasserlöslich)
- Naturkautschukmassen, Synthesekautschukmassen

Das Spliceverfahren, hier die Verklebung mit dem Splicetape kann insbesondere so erfolgen, daß das Klebeband rechtwinklig zur laufenden Bahn verklebt wird (Nachteil: Spaltbares Papiersystem muß in Sekundenbruchteilen komplett spalten), aber auch im spitzen Winkel (Vorteil: Spaltvorgang läuft als Welle durch das Klebeband), insbesondere bis zu 25 °, vor allem bis zu 15 °.

Die Zeichnung zeigt eine schematische Darstellung eines erfindungsgemäßen Klebebandes im Querschnitt und soll die Erfindung damit beispielhaft erläutern. Die Bezugszeichen sind in den Ansprüchen erläutert.

### Prüfmethoden

### Messung der Spaltfestigkeit von Papieren

### Zweck- und Anwendungsbereich

Prüfung der Festigkeit von Papier oder anderen aus Fasern aufgebauten Materialien in z-Richtung. Ermittelt wird die Spaltfestigkeit.
Die Spaltfestigkeit ist die Kraft, die zu überwinden ist um einen Papierkörper in z-Richtung zu spalten.

### Prinzip der Methode

Zwei Klebebänder werden gegenüberliegend auf dem zu prüfenden Papier aufgebracht und an der Zugprüfmaschine in einem Winkel von 180° auseinander gezogen. Die dabei zu überwindende Kraft zum Spalten des Papieres ist die Spaltfestigkeit.

### Geräte und Prüfklima

Zugprüfmaschine
Klingen- oder Streifenschneider 15mm Breite
Handaufroller 2kg
Prüfklima: 23 +/- 1°C, 50 +/- 5% rel. Feuchte

### Materialien

Klebeband wie z.B. testband 7475
Breite 20 mm, Streifen ca. 20 cm Länge

### Prüfmuster

DIN A4 Blätter
Die Muster müssen mind. 16 h im Normklima konditionieren.

### Versuchsdurchführung

Zwei Klebebänder werden von beiden Seiten gegenüberliegend auf das zu prüfende Papier aufgelegt und leicht mit dem Finger angestrichen, um Lufteinschlüsse zu vermeiden.

Danach wird mit dem Handroller je Seite 2x zügig über den Verbund gerollt, um eine einwandfreie Verklebungsfestigkeit zu erreichen.
Die Verklebung ist so herzustellen, daß auf einer Seite die Enden des Klebebandes über den Prüfkörper herausragen und unter Falten auf sich selbst zu einem Anfasser verklebt werden können.
Die Prüfrichtung kann je nach Prüfziel in Laufrichtung oder quer zur Laufrichtung des Prüfkörpers erfolgen.

Mit dem Stahllineal werden mittig des Verbundes 15 mm Breite Streifen in einer Länge von ca. 20 cm herausgeschnitten. Sodann werden die beiden Anfasser des überragenden Klebebandes per Hand auseinandergezogen, bis ein Spalten des Papierprüflings erkennbar ist.
Dann wird der Prüfkörper an den Anfassem frei hängend oben und unten in die Zugprüfmaschine eingespannt und der Rest des Streifens unter konstanter Geschwindigkeit bei 300 mm/min auseinandergezogen.
Es ist bei sehr dünnenen Papieren darauf zu achten, daß das Ergebnis nicht dadurch verfälscht wird, daß die gegenüberliegenden Kanten des Klebebandes am Rand des Prüfkörpers Kontakt haben und verkleben.

### Auswertung und Beurteilung

Die Spaltfestigkeit des Papieres wird in cN/cm angegeben.
Aus 5 ermittelten Werten wird der Mittelwert angegeben.

### Anwendungsbeispiele

Die nachfolgenden Beispiele beschreiben erprobte Versuchsprodukte für den fliegenden Rollenwechsel, die Splicebedingungen und die Spliceergebnisse. Die erprobten Produktaufbauten sind in Tabelle 1 dargestellt.

Die Zeichnung beschreibt den dazugehörenden Produktaufbau.

### Beschreibung der eingesetzten Papiersysteme:

Folgende Streichrohpapiere wurden für die Spliceversuche eingesetzt:
- [ A ] Streichrohpapier (Flächengewicht 33 g/m², Dicke 58 µm) z.B.: Stora Kabel GmbH, 58099 Hagen
- [ B ] Streichrohpapier (Flächengewicht 60 g/m², Dicke 80 µm) z.B.: Stora Uetersen GmbH, 25436 Uetersen
- [ C ] Streichrohpapier (Flächengewicht 134 g/m², Dicke 167 µm) z.B.: Sappi Alfeld AG, 31061 Alfeld

Folgende Spaltpapiere wurden für die Versuchsprodukte eingesetzt:
- [ D ] Duplex Filterpapier
- Flächengewicht 51 g/m², Dicke 90 µm
   Spaltarbeit quer 34 - 44 cN/ cm
- [ E ] Einseitig glattes Naturpapier
   Flächengewicht 57 g/m², Dicke 74 µm
   Spaltarbeit quer 33 - 38 cN/ cm
- [ F ] Hochsatiniertes Kraftpapier
   Flächengewicht 50 g/m², Dicke 57 µm
   Spaltarbeit quer 40 - 45 cN/ cm
- [ G ] Geleimtes Papierverbundsystem mit definierter Spaltarbeit.
   Zwei maschinenglatte Rohpapiere werden mit einem stärkehaltigen Leim zusammengeklebt. Flächengewicht jeweils 54 g/m², Dicke 66 µm. Die Spaltarbeit des Verbundes quer beträgt 28 - 32 cN/ cm.

Folgende Trägerpapiere wurden für die Versuchsprodukte eingesetzt:
- [ H ] Maschinenglattes Rohpapier
   Flächengewicht 54 g/m², Dicke 66 µm, Höchstzugkraft quer 40 N/ 15 mm
- [ I ] Einseitig gestrichenes glattes Rohpapier
   Flächengewicht 59 g/m², Dicke 52 µm, Höchstzugkraft quer 30 N/ 15 mm
- [ J ] Beidseitig gestrichenes, verdichtetes, bedruckbares Decorepapier
   Flächengewicht 80 g/m², Dicke 62 µm, Höchstzugkraft quer 30 N/ 15 mm
- [ K ] Einseitig doppel gestrichenes, holzfreies, hochglänzendes Kraftpapier Flächengewicht 63 g/m², Dicke 51 µm, Höchstzugkraft quer 30 N/ 15 mm

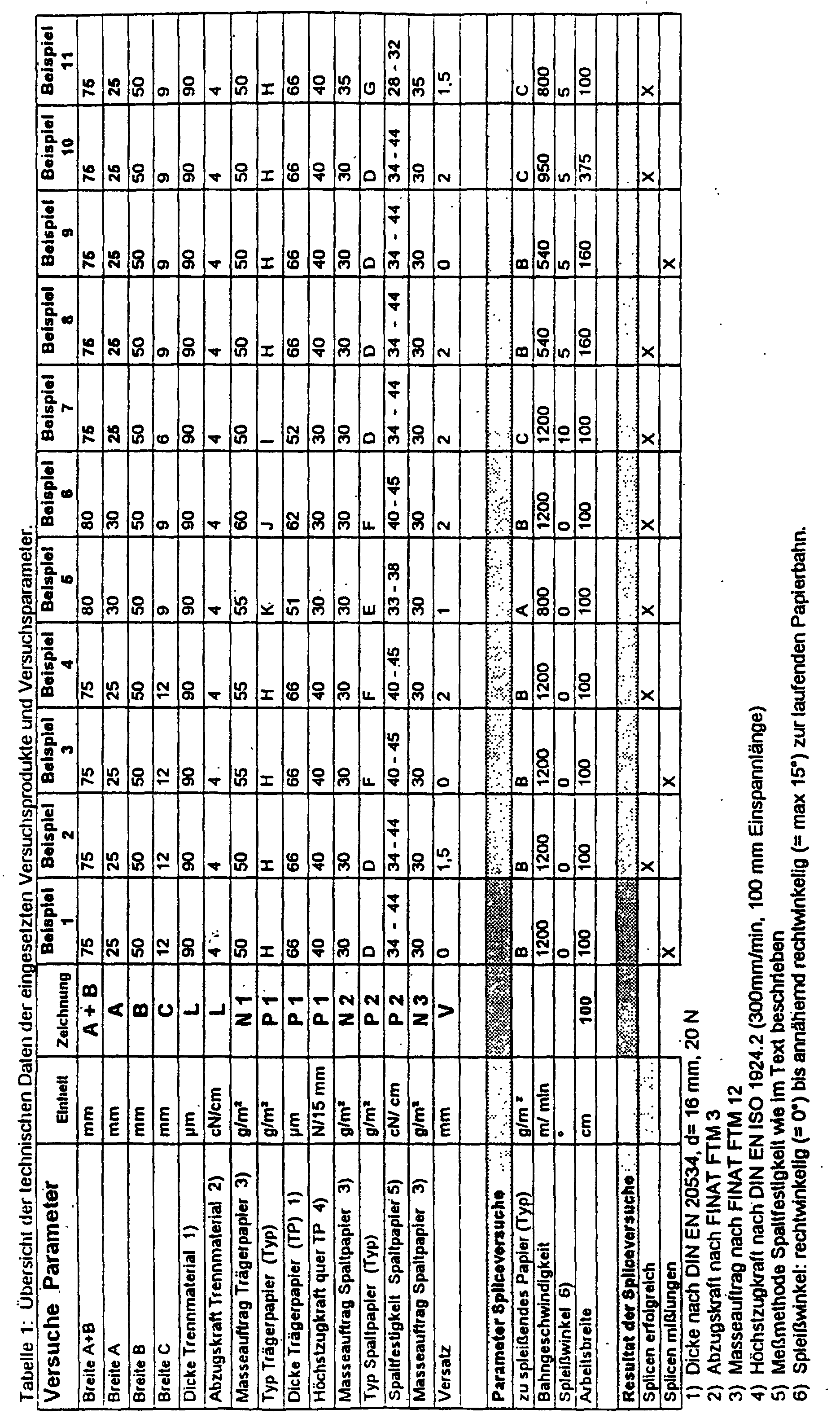

## Patentansprüche

1. Klebeband mit klebender Vorderseite und nichtklebender Rückseite sowie zwei Längskanten für den fliegenden Rollenwechsel, mit
a) einem Papierträger (P1), der einseitig an der Vorderseite mit einer Selbstklebemasse (N1) beschichtet ist wobei
b) ein Teil der nichtklebenden Rückseite des Papierträgers (P1) mit einem doppelseitig klebenden Klebeband (DO) ausgerüstet ist, welches einerseits einen Papierträger (P2) aus Spaltpapier aufweist, der beidseitig mit Selbstklebemasse (N2, N3) beschichtet ist, **dadurch gekennzeichnet, daß**
c) das doppelseitig klebende Klebeband (DO) in einem Abstand (V) von 0,5 bis 15 mm von der einen Längskante (LK) des Klebebandes angeordnet ist.

2. Klebeband nach Anspruch 1, **dadurch gekennzeichnet, daß** der Abstand (V) 1 bis 7 mm beträgt.

3. Klebeband nach Anspruch 1, **dadurch gekennzeichnet, daß** der Abstand (V) 1,5 bis 3,5 mm beträgt.

4. Klebeband nach Anspruch 1, **dadurch gekennzeichnet, daß** die Selbstklebemassen (N1, N2, N3) Haftklebemassen auf Basis von Acrylaten oder Kautschuk sind.

5. Klebeband nach Anspruch 1, **dadurch gekennzeichnet, daß** die Selbstklebemassen (N1, N2, N3) wasserlösliche Haftklebemassen auf Basis von Acrylaten sind.

6. Klebeband nach Anspruch 1, **dadurch gekennzeichnet, daß** die Selbstklebemasse (N1) mit einem Trennmaterial (L) abgedeckt ist.

7. Klebeband nach Anspruch 6. **dadurch gekennzeichnet, daß** das Trennmaterial (L) mit einem Schlitz (SC) versehen ist.

8. Klebeband nach Anspruch 7, **dadurch gekennzeichnet, daß** der Schlitz (SC) in einem Abstand von 20 bis 40 mm von der Längskante (LK 2) des Klebebandes angeordnet ist, welche der Längskante (LK1) gegenüber liegt, in deren Nähe das doppelseitig klebende Klebeband (DO) angeordnet ist.

9. Klebeband nach Anspruch 1, **dadurch gekennzeichnet, daß** das doppelseitig klebende Klebeband (DO) 3 bis 20 mm, insbesondere 6 bis 12 mm breit ist.

10. Klebeband nach Anspruch 1, **dadurch gekennzeichnet, daß** die Spaltfestigkeit des Papierträgers (P2) 20 bis 70 cN/cm, insbesondere 22 bis 60 cN/cm, ganz besonders 25 bis 50 cN/cm beträgt.

11. Spliceverfahren, bei dem der obersten Papierbahn einer Papierrolle ein Klebeband nach einem der Ansprüche 1-10 teilweise hinterklebt wird, während das auf der Rückseite des Klebebandes befindliche doppelseitig klebende Klebeband seinerseits mit der darunter liegenden Papierbahn verklebt und damit die oberste Papierbahn sichert, wobei zunächst nur ein Teil des gegebenenfalls auf der Selbstklebemasse befindlichen Trennmaterials abgezogen wurde, so daß der zum Spliceverfahren benötigte Teil der Selbstklebemasse noch mit Trennmaterial abgedeckt ist und die Papierrolle in diesem Zustand keine freie klebende Fläche aufweist, worauf zur abschließenden Vorbereitung des Spliceverfahrens das gegebenenfalls noch vorhandene restliche Trennmaterial entfernt wird, worauf die so ausgerüstete neue Papierrolle neben eine fast gänzlich abgespulte, zu ersetzende alte Papierrolle plaziert wird und auf die gleiche Drehgeschwindigkeit wie diese beschleunigt wird, dann gegen die alte Papierbahn gedrückt wird, wobei die offenliegende Selbstklebemasse des Klebebandes mit der alten Papierbahn bei im wesentlichen gleichen Geschwindigkeiten der Papierbahnen verklebt, während zugleich der Papierträger aus Spaltpapier spaltet und beide Selbstklebemassen,die auf ihm beschichtet waren, mit seinen Resten nichtklebend abdeckt.

12. Spliceverfahren nach Ansruch 11, **dadurch gekennzeichnet, daß** das Klebeband rechtwinklig zur laufenden Papierbahn verklebt wird oder aber im spitzen Winkel von bis zu 25°, insbesondere bis zu 15 °.

## Claims

1. Adhesive tape with adhesive front side and nonadhesive rear side and two long edges for flying reel change, having
a) a paper backing (P1), which is coated on one side - the front side - with a self-adhesive composition (N1),
b) part of the nonadhesive rear side of the paper backing (P1) being equipped with a double-sided adhesive tape (DO) which has, on one side, a paper backing (P2) composed of cleaving paper and coated on both sides with self-adhesive composition (N2, N3), **characterized in that**
c) the double-sided adhesive tape (DO) is arranged at a distance (V) of 0.5 to 15 mm from one long edge (LK) of the adhesive tape.

2. Adhesive tape according to Claim 1, **characterized in that** the distance (V) is 1 to 7 mm.

3. Adhesive tape according to Claim 1, **characterized in that** the distance (V) is 1.5 to 3.5 mm.

4. Adhesive tape according to Claim 1, **characterized in that** the self-adhesive compositions (N1, N2, N3) are pressure-sensitive adhesive compositions based on acrylates or rubber.

5. Adhesive tape according to Claim 1, **characterized in that** the self-adhesive compositions (N1, N2, N3) are water-soluble adhesive compositions based on acrylates.

6. Adhesive tape according to Claim 1, **characterized in that** the self-adhesive composition (N1) is masked with a release material (L).

7. Adhesive tape according to Claim 6, **characterized in that** the release material (L) is provided with a slit (SC).

8. Adhesive tape according to Claim 7, **characterized in that** the slit (SC) is arranged at a distance of 20 to 40 mm from that long edge (LK 2) of the adhesive tape which is opposite the long edge (LK1) close to which the double-sided adhesive tape (DO) is arranged.

9. Adhesive tape according to Claim 1, **characterized in that** the double-sided adhesive tape (DO) is 3 to 20 mm wide, especially 6 to 12 mm wide.

10. Adhesive tape according to Claim 1, **characterized in that** the cleavage strength of the paper backing (P2) is 20 to 70 cN/cm, especially 22 to 60 cN/cm, very particularly 25 to 50 cN/cm.

11. Splicing method, in which an adhesive tape according to one of Claims 1 -10 is partly stuck behind the top paper web of a reel of paper, while the double-sided adhesive tape on the rear side of the adhesive tape is for its part stuck to the paper web beneath it and therefore secures the top paper web, firstly only part of the release material possibly located on the self-adhesive composition being pulled off, so that that part of the self-adhesive composition needed for the splicing method is still masked with release material and, in this state, the reel of paper has no free adhesive area, after which, in order to prepare for the splicing method finally, any remaining release material still present is removed, whereupon the new reel of paper equipped in this way is placed beside an old reel of paper which has been almost completely unwound and is to be replaced, and is accelerated to the same rotary speed as said old reel and is then pressed against the old paper web, the exposed self-adhesive composition of the adhesive tape sticking to the old paper or film web at essentially equal speeds of the paper webs, while at the same time the paper backing composed of cleaving paper cleaves and, with its remains, nonadhesively masks both self-adhesive compositions which were coated on said backing.

12. Splicing method as claimed in Claim 11, **characterized in that** the adhesive tape is bonded to the running paper web at right angles or else at an acute angle of up to 25°, especially up to 15 °.

## Revendications

1. Ruban adhésif comportant un recto adhésif et un verso non adhésif ainsi que deux arêtes longitudinales pour l'échange volant de rouleau, comportant
a) un support en papier (P1), qui est recouvert d'un côté sur son recto d'une masse autocollante (N1),
b) une partie du verso non adhésif du support en papier (P1) étant équipée d'un ruban adhésif collant des deux côtés (DO) qui présente d'une part un support en papier dissociable (P2), qui est recouvert des deux côtés d'une masse autocollante (N2, N3), **caractérisé en ce que**
c) le ruban adhésif collant des deux côtés (DO) est disposé à une distance (V) de 0,5 à 15 mm d'une des arêtes longitudinales (LK) du ruban adhésif.

2. Ruban adhésif selon la revendication 1, **caractérisé en ce que**
la distance (V) est de 1 à 7 mm.

3. Ruban adhésif selon la revendication 1, **caractérisé en ce que**
la distance (V) est de 1,5 à 3,5 mm.

4. Ruban adhésif selon la revendication 1, **caractérisé en ce que**
les masses autocollantes (N1, N2, N3) sont des masses de colle de contact à base d'acrylates ou de caoutchouc.

5. Ruban adhésif selon la revendication 1, **caractérisé en ce que**
les masses autocollantes (N1, N2, N3) sont des masses de colle de contact solubles à l'eau à base d'acrylates.

6. Ruban adhésif selon la revendication 1, **caractérisé en ce que**
la masse autocollante (N1) est recouverte d'une matière de séparation (L).

7. Ruban adhésif selon la revendication 6, **caractérisé en ce que**
la matière de séparation (L) est munie d'une fente (SC).

8. Ruban adhésif selon la revendication 7, **caractérisé en ce que**
la fente (SC) est disposée à une distance de 20 à 40 mm de l'arête longitudinale (LK 2) du ruban adhésif qui se trouve en face de l'arête longitudinale (LK1) à proximité de laquelle est disposé le ruban adhésif collant des deux côtés (DO).

9. Ruban adhésif selon la revendication 1, **caractérisé en ce que**
le ruban adhésif collant des deux côtés (DO) a une largeur de 3 à 20 mm, notamment de 6 à 12 mm.

10. Ruban adhésif selon la revendication 1, **caractérisé en ce que**
la dissociabilité du support en papier (P2) est de 20 à 70 cN/cm, notamment 22 à 60 cN/cm, tout particulièrement 25 à 50 cN/cm.

11. Procédé d'épissure, dans lequel est collé partiellement derrière la bande de papier située le plus au dessus d'un rouleau de papier un ruban adhésif selon l'une quelconque des revendications 1 à 10, tandis que le ruban adhésif collant des deux côtés se trouvant au recto du ruban adhésif est de son côté collé à la bande de papier située dessous et bloque ainsi la bande de papier située dessus, d'abord seulement une partie de la matière de séparation se trouvant éventuellement sur la masse autocollante ayant été retirée, de sorte que la partie nécessaire au procédé d'épissure de la masse autocollante est encore recouverte de matière de séparation et que le rouleau de papier ne présente dans cet état pas de surface collante libre, sur quoi, pour terminer la préparation du procédé d'épissure, le reste de la matière de séparation éventuellement encore existante est enlevée, sur quoi le nouveau rouleau de papier ainsi équipé est placé près d'un ancien rouleau de papier presque complètement dévidé et à changer et est accéléré à la même vitesse de rotation que celui-ci, est ensuite poussé contre l'ancienne bande de papier, la masse autocollante dégagée du ruban adhésif étant collée à l'ancienne bande de papier avec des vitesses substantiellement égales des bandes de papier, tandis qu'en même temps le support en papier dissociable se dissocie et recouvre avec ses restes, sans coller, les deux masses autocollantes qui étaient plaquées sur lui.

12. Procédé d'épissure selon la revendication 11, **caractérisé en ce que**
le ruban adhésif est collé en angle droit par rapport à la bande de papier en circulation, ou alors en angle aigu allant jusqu'à 25°, notamment jusqu'à 15°.
